# EUROPÄISCHE PATENTSCHRIFT

(11) **EP 3 626 503 B1**
(45) Veröffentlichungstag und Bekanntmachung des Hinweises auf die Patenterteilung: **03.11.2021**
(21) Anmeldenummer: 19184603.9
(22) Anmeldetag: 05.07.2019
(51) Int. Cl.: B60K 35/00, B60K 37/06, B60W 50/16, G05G 1/08, G05G 5/03, G05G 5/05, A01B 63/00

(54) **EINGABEVORRICHTUNG FÜR EINE LANDWIRTSCHAFTLICHE ARBEITSMASCHINE**
INPUT DEVICE FOR AN AGRICULTURAL MACHINE
DISPOSITIF D'ENTRÉE POUR UN ENGIN DE TRAVAIL AGRICOLE

(30) Priorität: 24.09.2018 DE 102018123438
(43) Veröffentlichungstag der Anmeldung: 25.03.2020
(73) Patentinhaber: CLAAS Tractor S.A.S., 78141 Vélizy-Villacoublay Cedex (FR)
(72) Erfinder: Römer, Jens, 91430 Igny (FR)
(74) Vertreter: CLAAS Gruppe

(56) Entgegenhaltungen:
- EP-A2- 1 220 073
- DE-A1- 10 208 984
- DE-T5-112014 001 998
- US-A1- 2016 224 114

## Beschreibung

Die vorliegende Anmeldung betrifft eine landwirtschaftliche Arbeitsmaschine mit einer Eingabevorrichtung gemäß Anspruch 1. Ferner betrifft die vorliegende Anmeldung ein Verfahren zur Bedienung einer landwirtschaftlichen Arbeitsmaschine gemäß Anspruch 8.

Die Eingabevorrichtung umfasst ein Bedienelement, dass von einem Maschinenführer der Arbeitsmaschine bedient werden kann. Hierbei kann es sich beispielsweise um einen Joystick, einen Hebel oder ein Drehrad handeln. Eine Bewegung des Bedienelements führt dazu, dass ein jeweiliges Arbeitsorgan, das mit der Eingabevorrichtung zusammenwirkt, gesteuert wird. Beispielsweise ist es denkbar, dass das Bedienelement in Form eines Hebels ausgebildet ist, der zur Steuerung einer Hydraulik eines Frontladers einer Arbeitsmaschine vorgesehen ist. Die Bewegung des Bedienelements löst zumindest mittelbar eine Steuerinformation aus, die in eine Steuerreaktion übersetzt wird. Mittels letzterer wird sodann das jeweilige Arbeitsorgan gesteuert. Um die Steuerinformation zu ermitteln, ist es dabei erforderlich, dass eine jeweilige Bewegung des Bedienelements erfasst wird, das heißt eine Bewegungsinformation ermittelt wird. Die vorstehend beschriebene Steuerinformation kann sodann auf Basis der Bewegungsinformation ermittelt werden. Dieses Vorgehen ist insbesondere bei elektrischen Eingabevorrichtungen bedeutsam, bei dem eine mittelbare mechanische Kopplung eines jeweiligen Bedienelements mit dem zur Steuerung vorgesehenen Arbeitsorgan nicht gegeben ist.

Eine solche Vorgehensweise ist beispielsweise aus der deutschen Offenlegungsschrift DE 10 2009 016 919 A1 bekannt. Dort wird insbesondere ein Bewegungselement in Form eines Handrades vorgeschlagen, das um eine Drehachse drehbar gelagert ist. Das Handrad wirkt mit einem Sollwertgeber zusammen, der mit einer Steuereinheit verbunden ist. Der Sollwertgeber kann beispielsweise von einem Potentiometer gebildet sein. In Abhängigkeit einer Drehstellung des Handrades bzw. des damit gekoppelten Sollwertgebers wird eine Steuerinformation erzeugt, die an dem betroffenen Arbeitsorgan, das hier von einer Hubvorrichtung gebildet ist, in eine Steuerreaktion umgesetzt wird. Somit führt beispielsweise das Drehen des Handrades im Uhrzeigersinn zu einer Anhebung der Hubvorrichtung, während das Drehen entgegen dem Uhrzeigersinn zu einer Absenkung der Hubvorrichtung führt. Gemäß besagter Schrift kann das Handrad mit einer haptischen Rückkopplung versehen sein, die in Abhängigkeit einer Stellung des Arbeitsorgans eine haptische Rückmeldung auf das Drehrad ausübt. Auf diese Weise wird der Maschinenführer in die Lage versetzt, eine Stellung des Arbeitsorgans zu "fühlen", ohne dass ein optischer Kontakt zu dem Arbeitsorgan erforderlich ist.

Die bekannte Eingabevorrichtung ist zumindest insoweit von Nachteil, als die Eingabevorrichtung spezifisch auf eine bestimmte Anwendung wie zum Beispiel das Anheben oder Absenken eines Frontladers zugeschnitten ist.

Eine Eingabevorrichtung für eine Baumaschine der eingangs genannten Art ist aus der DE 11 2014 001 998 T5 bekannt. Darin sind mehrere Eingabevorrichtungen in Form eines Lenkrades und zweier Joysticks offenbart, wobei das Lenkrad nur der Ansteuerung eines Lenkmechanismus mittels eines steer-by-wire-Lenksystems dient und die beiden Joysticks der Ansteuerung jeweils eines Hydraulikzylinders der Baumaschine. Eine landwirtschaftliche Arbeitsmaschine der eingangs genannten Art ist aus der DE 102 08 984 A1 bekannt.

Der vorliegenden Anmeldung liegt mithin die Aufgabe zugrunde, eine Eingabevorrichtung bereitzustellen, die im Vergleich zum Stand der Technik flexibler einsetzbar ist.

Die zugrunde liegende Aufgabe wird erfindungsgemäß mittels einer Eingabevorrichtung mit den Merkmalen des Anspruchs 1 gelöst. Vorteilhafte Ausgestaltungen ergeben sich aus den Unteransprüchen 2 bis 7.

Das Bedienelement der erfindungsgemäßen Eingabevorrichtung ist stufenlos und/oder inkrementell bewegbar ausgebildet. Auf diese Weise kann mittels des Bedienelements grundsätzlich eine Vielzahl verschiedener Arbeitsorgane einer landwirtschaftlichen Arbeitsmaschine bedient werden. Da das Bedienelement unabhängig von einer spezifischen Verwendung desselben verwendbar sein soll, wirkt es mit einem Sensor zusammen, mittels dessen mindestens eine Bewegungsinformation betreffend eine Bewegung des Bedienelements erfassbar ist. Diese Bewegungsinformation ist sodann an eine Steuereinheit leitbar, mittels derer die Bewegungsinformation verarbeitbar ist. In Abhängigkeit des jeweils mit der Eingabevorrichtung zusammenwirkenden Arbeitsorgans kann die Steuereinheit die erhaltene Bewegungsinformation in eine Steuerinformation übersetzen, aus der sich an dem jeweiligen Arbeitsorgan selbst eine Steuerreaktion ableiten lässt. Beispielsweise kann eine Bewegung des Bedienelements mittels der Steuereinheit bezogen auf einen Frontlader in ein Anheben oder Absenken des Frontladers übersetzt werden.

Die Steuereinheit ist ferner dazu geeignet, eine Rückmeldeinformation zu ermitteln, die an ein mit dem Bedienelement zusammenwirkendes Rückmeldemittel geleitet wird. Hierzu benötigt die Steuereinheit mindestens eine Statusinformation, die einen Bedienstatus des jeweiligen Arbeitsorgans betrifft. Besagte Statusinformation wird der Steuereinheit ausgehend von dem Arbeitsorgan zugeleitet. Die Statusinformation kann an dem Arbeitsorgan beispielsweis mittels eines entsprechenden Sensors ermittelt werden. Hierbei kann es sich am Beispiel eines Frontladers beispielsweise um einen Rotationssensor handeln, der eine Stellung des Frontladers relativ zu der übrigen Arbeitsmaschine erfasst. Die Statusinformation ist schließlich mittels der Steuereinheit derart verarbeitbar, dass die Rückmeldeinformation ermittelbar ist. Letztere ist sodann an das Rückmeldemittel leitbar.

Das Rückmeldemittel ist in Kraft übertragender Weise mit dem Bedienelement gekoppelt oder koppelbar, wobei das Rückmeldemittel in Abhängigkeit der von der Steuereinheit erhaltenen Rückmeldeinformation eine veränderbare Rückmeldereaktion auf das Bedienelement ausüben kann. Insbesondere ist es denkbar, dass eine Bewegung des Bedienelements mittels des Rückmeldemittels zunehmend bzw. sukzessive erschwert wird, sobald das jeweils mit der Eingabevorrichtung zusammenwirkende Arbeitsorgan in Richtung eines Endes seines Arbeitsbereichs bewegt wird. Am Beispiel des Frontladers ist es denkbar, dass dieser auf eine maximal angehobene Position zu bewegt wird und sich somit einem oberen Ende seines Arbeitsbereichs annähert. Mit zunehmender Annäherung an dieses Ende des Arbeitsbereichs ändert sich zunächst die von dem Arbeitsorgan abgegebenen Statusinformation und mithin die mittels der Steuereinheit auf Basis der Statusinformation ermittelte Rückmeldeinformation, die entsprechend mittels des Rückmeldemittels in eine sich andere Rückmeldereaktion umgesetzt wird. Diese bewirkt, dass ein Bewegen des Bedienelements in solcher Weise, dass der Frontlader weiter angehoben wird, zunehmend erschwert und gegebenenfalls sogar vollständig blockiert wird.

Das Zusammenwirken von Sensor, Steuereinheit und Rückmeldemittel ermöglicht eine von der konkreten Anwendung unabhängige Konfiguration des Bedienelements. Somit ist das Bedienelement beispielsweise ebenso zur Bedienung einer Datenverarbeitungsanlage der Arbeitsmaschine geeignet, die im Sinne der vorliegenden Anmeldung gleichermaßen als "Arbeitsorgan" bezeichnet wird. Insbesondere kann mittels des Bedienelements ein virtuelles Menü der Datenverarbeitungsanlage bedient werden, wobei das Bedienelement mittels des Rückmeldemittels derart beeinflussbar ist, dass für die jeweilige Anwendung des Bedienelements eine individuelle Rückmeldereaktion bereitgestellt werden kann. Auf diese Weise kann die Eingabevorrichtung ohne Weiteres für die Bedienung verschiedener Arbeitsorgane verwendet werden. Insbesondere ist es denkbar, mittels der erfindungsgemäßen Eingabevorrichtung einen Frontlader, ein Hubwerk, eine Lenkung (steer-by-wire) oder eine Datenverarbeitungsanlage zu bedienen.

In einer besonders vorteilhaften Ausgestaltung ist das Bedienelement anschlagfrei und/oder rückstellkraftfrei ausgebildet. Eine solche Ausgestaltung ist insbesondere dann von Vorteil, wenn das Bedienelement von einem Drehrad gebildet ist, das um eine Drehachse drehbar gelagert ist. Ein solches Bedienelement ist vorteilhafterweise nicht durch einen physischen Anschlag in seiner Bewegung begrenzt, sondern kann vielmehr "unendlich" bewegt werden. Diese Freiheit der Bewegung des Bedienelements wird hier als "anschlagfrei" bezeichnet. Unabhängig von einem physischen Anschlag kann gleichwohl ein "virtueller Anschlag" individuell bezogen auf ein jeweilig zu bedienendes Arbeitsorgan mittels einer Rückmeldereaktion des Rückmeldemittels erzeugt werden. Insbesondere kann die Rückmeldereaktion einen Widerstand gegen eine Bewegung des Bedienelements über einen bestimmten Punkt hinaus erzeugen, sodass das Bedienelement einen solchen virtuellen Anschlag erhält. Dieser virtuelle Anschlag ist jedoch nicht fix oder an einer vorgegebenen Stellung des Bedienelements mechanisch bedingt, sondern individuell mittels des Rückmeldemittels erzeugbar und aufhebbar. Insbesondere ist es denkbar, dass mittels des Bedienelements verschiedene Arbeitsorgane bedient werden, wobei bei einem Wechsel von einem Arbeitsorgan auf ein anderes Arbeitsorgan anlässlich einer entsprechend anderen Statusinformation seitens der Steuereinheit eine andere Rückmeldeinformation ermittelt wird, woraufhin sich auch die Rückmeldereaktion des Rückmeldemittels, die sie auf das Bedienelement ausgeübt wird, verändert. Folglich kann ohne jegliche Bewegung des Bedienelements allein mittels Veränderung des zu bedienenden Arbeitsorgans eine an dem Bedienelement anliegende Rückmeldereaktion geändert werden. Beispielsweise kann ein virtueller Anschlag wegfallen, sodass das Bedienelement wieder frei bewegbar ist.

Die Ausgestaltung des Bedienelements rückstellkraftfrei führt im Übrigen dazu, dass das Bedienelement nicht automatisch nach Wegnahme einer händischen Bedienkraft in eine bestimmte Nullstellung oder sonstige Ausgangsposition zurück überführt wird. Das heißt dass das Bedienelement nach Wegfall der Bedienkraft in seiner aktuellen Position verbleibt. Eine solche Ausgestaltung ist insbesondere dann von Vorteil, wenn das Bedienelement endlos bewegbar ausgebildet ist, sodass eine Rückstellung in eine bestimmte Nullstellung oder Ausgangsposition nicht erforderlich ist, um das Bedienelement weiter zu benutzen. Insbesondere bei Ausführung des Bedienelements in Form eines frei um eine Drehachse verdrehbaren Drehrades ist die Ausgestaltung des Bedienelements in rückstellkraftfreier Form vorteilhaft.

Alternativ ist es ebenso denkbar, dass das Bedienelement mit mindestens einem Rückstellelement zusammenwirkt, mittels dessen das Bedienelement nach einer Wegnahme einer Bedienkraft in eine Nullstellung rücküberführbar ist. Eine solche Ausgestaltung kann für bestimmte Bedienelemente, insbesondere Joysticks, Kipphebel oder Druckknöpfe sinnvoll sein, die aufgrund ihrer Wirkungsweise grundsätzlich einen mechanischen Anschlag aufweisen müssen. Somit verfügt beispielsweise ein Joystick grundsätzlich über einen festgelegten Bewegungsbereich, innerhalb dessen er um eine Nullstellung herum ausgelenkt werden kann. Nach Wegnahme einer Bedienkraft ist es daher in aller Regel vorteilhaft, wenn ein solcher Joystick wieder zurück in seine Nullstellung überführt wird, um für eine weitere Bedienung einen jeweils erforderlichen Bewegungsspielraum zur Verfügung zu haben.

Die Eingabevorrichtung umfasst mindestens eine Auswahleinheit, mittels derer mindestens ein mittels der Eingabevorrichtung zu bedienendes Arbeitsorgan der landwirtschaftlichen Arbeitsmaschine auswählbar ist. Dazu ist die Eingabevorrichtung mit einer Mehrzahl von Arbeitsorganen verbunden, wobei eine "aktive Verbindung" jeweils typischerweise lediglich mit einem der Arbeitsorgane vorliegt. Mit anderen Worten führt eine Bewegung des Bedienelements in letzter Konsequenz jeweils zur Bedienung eines einzigen Arbeitsorgans, nicht jedoch zur Bedienung mehrerer Arbeitsorgane gleichzeitig. Mittels einer Auswahleinheit wird die Möglichkeit geschaffen, ein jeweils zu bedienendes Arbeitsorgan auszuwählen. Somit ist es beispielsweise denkbar, dass der Maschinenführer der Arbeitsmaschine nach einer Bedienung des Frontladers nunmehr unabhängig von dem Frontlader als solchem eine an einem vorderen Ende des Frontladers angeordnete Schaufel bedienen möchte. Mittels der Auswahleinheit wechselt der Maschinenführer von "Frontlader" auf "Schaufel", woraufhin er mit demselben Bedienelement, mittels dessen er zuvor den Frontlader bedient hat, nunmehr die Schaufel bedienen kann. Infolge des Wechsels des Arbeitsorgans wird der Steuereinheit eine andere Statusinformation zugeleitet, nämlich nunmehr diejenige, die den Bedienstatus des anderen Arbeitsorgans wiedergibt, in vorstehendem Beispiel folglich die Statusinformation der Schaufel. Folglich wird mittels der Steuereinheit aufgrund der geänderten Statusinformation nunmehr eine andere Rückmeldeinformation ermittelt, sodass sich in weiterer Konsequenz auch die Rückmeldereaktion des mit dem Bedienelement zusammenwirkenden Rückmeldemittels ändert. Beispielsweise ist es denkbar, dass beim Wechsel von dem Frontlader auf die Schaufel eine Rückmeldereaktion ausgelöst wird, die eine Bewegung des Bedienelements in eine Richtung, die mit einem Abkippen der Schaufel assoziiert ist, blockiert, da die Schaufel bereits vollständig abgekippt ist. Diese Rückmeldereaktion "Blockieren" (virtueller Anschlag) hat in diesem Beispiel zuvor bei Auswahl des Frontladers als zu bedienendem Arbeitsorgan nicht vorgelegen, da sich der Frontlader nicht in seiner vollständig abgesenkten Stellung befand. Die infolge des Wechsels des Arbeitsorgans schlagartig ändernde Statusinformation wird mithin letztlich in eine sich ggf. gleichermaßen schlagartig ändernde Rückmeldereaktion an dem Bedienelement übersetzt.

Die erfindungsgemäße Eingabevorrichtung weiter ausgestaltend umfasst diese mindestens eine Speichereinheit, die mit der Steuereinheit zusammenwirkt. Die Speichereinheit ist dazu geeignet, mindestens eine Statusinformation betreffend einen Bedienstatus mindestens eines Arbeitsorgans zu speichern, das mit der Eingabevorrichtung bedienbar ist. Die Speicherung einer Statusinformation kann besonders sinnvoll sein, wenn die Eingabevorrichtung zur Bedienung verschiedener Arbeitsorgane verwendet wird. Somit kann bei einem Wechsel von einem Arbeitsorgan zu einem anderen Arbeitsorgan eine jeweilige Statusinformation des Arbeitsorgans, das zuletzt bedient wurde, gespeichert werden, sodass bei einer späteren abermaligen Auswahl des Arbeitsorgans der Steuereinheit unmittelbar die Statusinformation betreffend den aktuellen Bedienstatus des Arbeitsorgans zur Verfügung steht. Am vorstehenden Beispiel der Schaufel veranschaulicht würde bei einem Wechsel des Arbeitsorgans von der Schaufel hin zu dem Frontlader auf der Speichereinheit die Statusinformation abgespeichert, dass der Bedienstatus der Schaufel "vollständig abgekippt" ist. Bei nächstmaliger Anwahl der Schaufel als zu bedienendes Arbeitsorgan kann die Steuereinheit unter Zugriff auf die Speichereinheit die diesem Bedienstatus zugehörige Statusinformation der Schaufel erfassen und unmittelbar die zugeordnete Rückmeldeinformation ermitteln und dem Rückmeldemittel bereitstellen, damit letzteres die dem Bedienstatus des Arbeitsorgans entsprechende Rückmeldereaktion auf das Bedienelement ausüben kann.

Sofern eine Speichereinheit vorhanden ist, kann es unabhängig von der Speicherung einer Statusinformation besonders vorteilhaft sein, wenn auf der Speichereinheit mindestens eine Bereichsinformation betreffend einen Arbeitsbereich des mittels der Eingabevorrichtung zu bedienenden Arbeitsorgans gespeichert oder speicherbar ist. Die Bereichsinformation kann der Steuereinheit zur Verfügung gestellt werden, sodass die Steuereinheit besonders einfach eine zutreffende Rückmeldeinformation ermitteln kann. Insbesondere kann ein aktueller Bedienstatus des jeweiligen Arbeitsorgans mit dem Arbeitsbereich abgeglichen werden, woraufhin die Steuereinheit eine entsprechende Rückmeldeinformation ermittelt und an das Rückmeldemittel leitet. Mittels des Rückmeldemittels kann sodann die Bewegung des Bedienelements jeweils erschwert oder erleichtert werden, je nachdem in welche Richtung sich der Bedienstatus des Arbeitsorgans bezogen auf den Arbeitsbereich verändert. Auch ist eine vollständige Blockade des Bedienelements denkbar.

In einer besonders vorteilhaften Ausgestaltung weist das Rückmeldemittel eine magnetorheologische Flüssigkeit sowie mindestens ein Magnetelement auf. Ein solches Rückmeldemittel kann besonders einfach verschiedene Rückmeldereaktionen auf das Bedienelement ausüben. Insbesondere ist denkbar, dass sich eine Viskosität der magnetorheologischen Flüssigkeit mit einer Veränderung einer Feldstärke eines mittels des Magnetelements erzeugten Magnetfelds ebenfalls verändert, vorzugsweise proportional. Auf diese Weise ist es besonders einfach möglich, mittels einer Veränderung der Feldstärke des Magnetfelds des Magnetelements die Rückstellreaktion, die auf das Bedienelement wirkt, zu verändern. Vorteilhafterweise ist das Magnetelement von mindestens einer Spule gebildet, mittels derer mittels Anlegens eines elektrischen Stroms ein Magnetfeld erzeugbar ist. Die Feldstärke des Magnetfelds kann dann besonders einfach mittels Veränderung einer Stromstärke des an die Spule angelegten elektrischen Stroms verändert werden.

Eine Verbindung zwischen dem Bedienelement und dem Rückmeldemittel kann beispielsweise darin bestehen, dass ein Übertragungselement des Bedienelements in unmittelbarem mechanischen Kontakt mit der magnetorheologischen Flüssigkeit steht. Mit einer Versteifung der magnetorheologischen Flüssigkeit, das heißt einer Steigerung ihrer Viskosität, wird eine Bewegung des Bedienelements zunehmend erschwert, da ein Bewegungswiderstand, der auf das Übertragungselement wirkt, ansteigt. Der Maschinenführer der Arbeitsmaschine nimmt dies als zunehmenden Widerstand gegen eine weitere Bewegung des Bedienelements wahr und erhält somit unmittelbar die haptische Rückmeldung, dass sich ein Bedienstatus des jeweils bedienten Arbeitsorgans in Richtung eines Endes seines Arbeitsbereich Arbeitsorgans bewegt. Besagtes Ende ist dann erreicht, wenn die magnetorheologische Flüssigkeit vollständig versteift, sodass eine Bewegung des Übertragungselements zumindest im Wesentlichen verhindert ist. Entsprechend ist auch eine Bewegung des Bedienelements verhindert, wodurch effektiv der vorstehend beschriebene "virtuelle Anschlag" hergestellt ist.

Die erfindungsgemäße Aufgabe wird ferner mittels eines Verfahrens mit den Merkmalen des Anspruchs 8 gelöst. Vorteilhafte Ausgestaltungen ergeben sich aus den Unteransprüchen 9 bis 14.

Das erfindungsgemäße Verfahren umfasst die folgenden Verfahrensschritte:
a) Ein Bedienelement einer Eingabevorrichtung wird ausgehend von einer ersten Bedienposition stufenlos und/oder inkrementell in Richtung einer zweiten Bedienposition bewegt.
b) Ein mit dem Bedienelement zusammenwirkender Sensor erfasst mindestens eine Bewegungsinformation betreffend die Bewegung des Bedienelements, woraufhin die Bewegungsinformation an eine Steuereinheit geleitet wird.
c) Die Bewegungsinformation wird mittels der Steuereinheit verarbeitet, wobei mindestens eine Steuerinformation zur Steuerung eines jeweiligen Arbeitsorgans der Arbeitsmaschine ermittelt wird.
d) Die Steuerinformation wird an das Arbeitsorgan geleitet und an dem Arbeitsorgan in eine Steuerreaktion umgesetzt, infolge derer sich ein Bedienstatus des Arbeitsorgans ändert.
e) Eine infolge der Veränderung des Bedienstatus veränderte Statusinformation des Arbeitsorgans wird an die Steuereinheit geleitet, wobei mittels der Steuereinheit die Statusinformation verarbeitet und basierend auf der Statusinformation eine Rückmeldereaktion ermittelt werden.
f) Die Rückmeldeinformation wird an ein Rückmeldemittel geleitet, das in Kraft übertragender Weise mit dem Bedienelement gekoppelt oder koppelbar ist, wobei mittels des Rückmeldemittels in Abhängigkeit der Rückmeldeinformation eine Rückmeldereaktion auf das Bedienelement ausgeübt wird, die im Zuge der Bewegung des Bedienelements verändert wird.

Das erfindungsgemäße Verfahren ist mittels der erfindungsgemäßen Eingabevorrichtung besonders einfach durchführbar. Die sich hieraus ergebenden Vorteile sind vorstehend bereits dargelegt. Insbesondere können mittels des erfindungsgemäßen Verfahrens besonders einfach verschiedene Arbeitsorgane mittels ein und desselben Bedienelements bedient werden. Somit ist das Verfahren besonders flexibel einsetzbar und nicht spezifisch auf ein bestimmtes Arbeitsorgan einer landwirtschaftlichen Arbeitsmaschine zugeschnitten.

In einer vorteilhaften Ausgestaltung des erfindungsgemäßen Verfahrens wird eine mittels des Rückmeldemittels auf das Bedienelement ausgeübte Rückmeldereaktion mit fortschreitender Bewegung des Bedienelements sukzessive erhöht. Insbesondere kann die Rückmeldereaktion bis hin zur Herstellung eines "virtuellen Anschlags" erhöht werden, der eine Bewegung des Bedienelements über eine dann erreichte Bedienposition hinaus zumindest im Wesentlichen blockiert. Eine sukzessive Erschwerung der Bewegung des Bedienelements fällt vorteilhafterweise mit einer Annäherung des Arbeitsorgans an ein Ende eines Arbeitsbereichs desselben, das heißt an eine Maximalstellung des Arbeitsorgans, zusammen. Sobald das Arbeitsorgan das Ende seines Arbeitsbereichs erreicht, gibt die Steuereinheit eine Rückmeldeinformation an das Rückmeldemittel, infolge derer das Rückmeldemittel die Rückmeldereaktion "Blockieren" auf das Bedienelement ausübt. Bei einer Bewegung des Bedienelements in eine entgegengesetzte Richtung, die eine Bewegung des Arbeitsorgans von seiner Maximalstellung weg in Richtung einer Mitte seines Arbeitsbereichs bewirkt, wird die Rückmeldereaktion des Rückmeldemittels vorzugsweise vollständig aufgehoben. Dann steht der Bewegung des Bedienelements in die entgegengesetzte Richtung kein nennenswerter Widerstand entgegen, sodass es sich besonders leicht bewegen, beispielsweise drehen, lässt.

Das erfindungsgemäße Verfahren weiter ausgestaltend wird die Rückmeldereaktion, mittels derer das Rückmeldemittel auf das Bedienelement Einfluss nimmt, mit einer Rückmeldefrequenz verändert, die mindestens 500 Hz, vorzugsweise mindestens 1500 Hz, weiter vorzugsweise mindestens 5000 Hz, beträgt. Auf diese Weise kann die haptische Rückmeldung, die der Maschinenführer über das Bedienelement erfährt, unmittelbar angepasst werden, wobei eine zeitliche Verzögerung zwischen der getätigten Eingabe mittels Bewegung des Bedienelements und der daraus resultierenden Rückmeldereaktion seitens des Rückmeldemittels sehr gering ist.

Vorteilhafterweise bleibt das Bedienelement nach einer Wegnahme einer Bedienkraft in seiner aktuellen Bedienposition. Eine Rückstellkraft, die eine Bewegung des Bedienelements in eine der seitens des Maschinenführers erzeugten Bewegung entgegengesetzte Richtung bewirkt, liegt nicht an. Dieses Vorgehen ist insbesondere dann von Vorteil, wenn als Bedienelement ein um eine Drehachse frei drehbares Drehrad verwendet wird.

In einer weiterhin vorteilhaften Ausgestaltung des erfindungsgemäßen Verfahrens wird mittels einer Auswahleinheit ein Arbeitsorgan der Arbeitsmaschine ausgewählt, das mittels der Eingabevorrichtung bedient werden soll. Hierbei wird mittels der Auswahleinheit eine Auswahlinformation an die Steuereinheit übermittelt. Das jeweilig ausgewählte Arbeitsorgan weist in jedem Fall einen Bedienstatus auf, beispielsweise bei einem Frontlader eine Schwenkstellung desselben oder bei einer Datenverarbeitungsanlage eine Cursorstellung. Die Steuereinheit wird sodann dazu genutzt, in Kenntnis einer Statusinformation betreffend diesen Bedienstatus des Arbeitsorgans eine Rückmeldeinformation zu ermitteln, die sodann an das Rückmeldemittel geleitet wird. Mittels des Rückmeldemittels wird schließlich entsprechend der Rückmeldeinformation eine Rückmeldereaktion auf das Bedienelement ausgeübt. Somit kann bei Auswahl eines Arbeitsorgans "Datenverarbeitungsanlage" aktuell der Bedienstatus vorliegen, dass sich der Cursor innerhalb eines Menüs befindet, das fünf untereinander angeordnete Elemente aufweist. Dabei befinde sich der Cursor aktuell auf dem obersten dieser fünf Elemente. Eine Bewegung des Cursors "weiter nach oben" ist mithin nicht möglich. Eine diesem Bedienstatus entsprechende Statusinformation der Datenverarbeitungsanlage wird an die Steuereinheit geleitet, sodass mittels der Steuereinheit die Rückmeldeinformation "Bewegung des Bedienelements nach oben blockieren" ermittelt und an das Rückmeldemittel geleitet wird. Das Rückmeldemittel bewirkt infolge dieser Rückmeldeinformation eine Rückmeldereaktion auf das Bedienelement, die eine Bewegung des Bedienelements blockiert, die mit einer Bewegung des Cursors der Datenverarbeitungsanlage nach oben korrespondiert. Eine dem entgegengesetzte Bewegung des Bedienelements, mittels derer der Cursor entlang der Elemente des Menüs nach unten bewegt werden kann, bleibt hingegen frei.

Bei einem Wechsel des zu bedienenden Arbeitsorgans kann eine jeweilige Statusinformation, die einen Bedienstatus des Arbeitsorgans im Moment des Wechsels bei dem zuvor ausgewählten Arbeitsorgan betrifft, auf einer Speichereinheit gespeichert werden, sodass die Statusinformation beim nächstmaligen Anwählen des jeweiligen Arbeitsorgans unmittelbar der Steuereinheit zur Verfügung steht.

Grundsätzlich ist es denkbar, dass ein Bedienstatus eines Arbeitsorgans mehrdimensional ist, das heißt von mehreren Parametern abhängt. Der Bedienstatus eines Frontladers hängt typischerweise nur von einem einzigen Parameter ab, nämlich seiner Höhe bzw. seiner Schwenkstellung. Der Bedienstatus einer Schaufel kann hingegen von mehreren Parametern abhängen. Dies können zum einen Schwenkstellung der Schaufel (zwischen maximal abgekippt und maximal angehoben) und zum anderen ein Füllgrad der Schaufel mit einem Schüttgut sein. Letzterer kann beispielsweise mittels eines Füllsensors ermittelt werden. Die Berücksichtigung des Füllgrades der Schaufel in der an die Steuereinheit geleiteten Statusinformation erlaubt beispielsweise die Ermittlung einer Rückmeldeinformation, die bei hohem Füllgrad eine Rückmeldereaktion hervorruft, die zu einer haptischen Versteifung des Bedienelements führt. Auf diese Weise wird es dem Maschinenführer erleichtert, eine Schwenkstellung der Schaufel präziser zu steuern, was angesichts des hohen Füllgrads der Schaufel vorteilhaft sein kann. Gleichzeitig kann die Rückmeldeinformation die Schwenkstellung der Schaufel berücksichtigen, wie vorstehend bereits beschrieben ist. Von der Steuerungslogik her ist es ebenfalls denkbar, dass ein Arbeitsorgan mehrere Statusinformationen an die Steuereinheit leitet, wobei mittels der Steuereinheit ermittelt wird, welche Statusinformation hinsichtlich einer zu ermittelnden Rückmeldereaktion maßgebend ist. Die Rückmeldeinformation wird dann für die maßgebende Statusinformation ermittelt und an das Rückmeldemittel geleitet.

Die landwirtschaftliche Arbeitsmaschine ist mit der erfindungsgemäßen Eingabevorrichtung gemäß der vorstehenden Beschreibung ausgestattet. Zudem verfügt die landwirtschaftliche Arbeitsmaschine, die insbesondere von einem Traktor gebildet sein kann, über eine Verbrennungskraftmaschine und mindestens ein Arbeitsorgan. Vorteilhafterweise weist die Arbeitsmaschine eine Mehrzahl von Arbeitsorganen auf, wobei weiter vorzugsweise mittels der Eingabevorrichtung eine Mehrzahl von Arbeitsorganen bedient werden kann. Dies hat den besonderen Vorteil, dass ein für verschiedene Bedienelemente innerhalb einer Fahrerkabine der Arbeitsmaschine erforderlicher Raum im Vergleich zum Stand der Technik besonders klein ist. Insbesondere ist es nicht nötig, für jedes Arbeitsorgan eine eigene Eingabevorrichtung und mithin ein eigenes Bedienelement vorzusehen. Stattdessen können mit einer einzigen oder wenigen Eingabevorrichtungen sämtliche Arbeitsorgane der Arbeitsmaschine bedient werden.

Die erfindungsgemäße Eingabevorrichtung ist nachstehend anhand eines Ausführungsbeispiels, das in den Figuren dargestellt ist, näher erläutert. Es zeigt:
- Fig. 1:: Eine Prinzipskizze einer erfindungsgemäßen Eingabevorrichtung,
- Fig. 2:: Eine Seitenansicht einer landwirtschaftlichen Arbeitsmaschine, die mit einer Eingabevorrichtung gemäß Figur 1 ausgestattet ist,
- Fig. 3:: Eine Prinzipskizze einer weiteren erfindungsgemäßen Eingabevorrichtung und
- Fig. 4:: Ein Querschnitt durch die Eingabevorrichtung gemäß Figur 3.

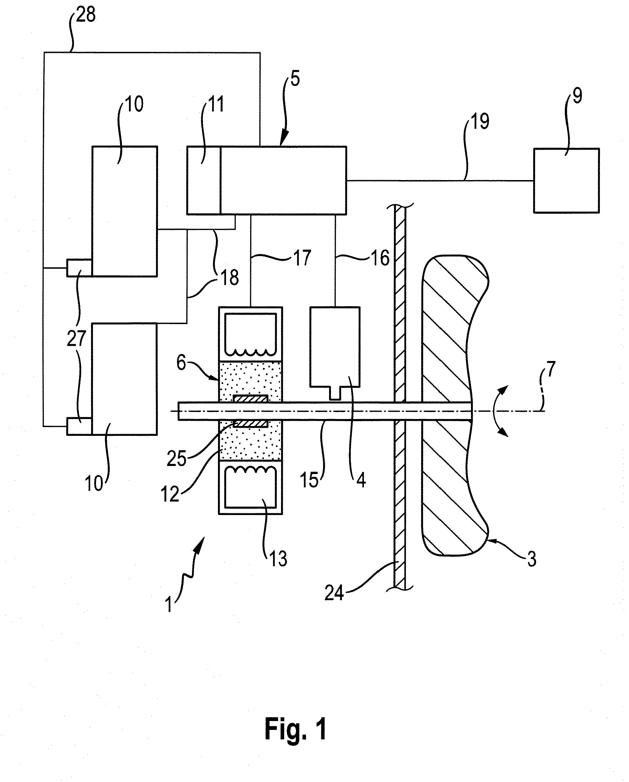

Ein erstes Ausführungsbeispiel einer erfindungsgemäßen Eingabevorrichtung 1, das in **Figur 1** gezeigt ist, umfasst ein Bedienelement **3,** das hier in Form eines Drehrades ausgebildet ist. Das Bedienelement **3** ist mittels einer Welle **15** um eine Drehachse **7** anschlagfrei sowie rückstellkraftfrei gelagert. Es befindet sich auf einer Außenseite eines Gehäuses **24,** sodass das Bedienelement **3** von einem eine landwirtschaftliche Arbeitsmaschine **2** führenden Maschinenführer bedienbar ist. Insbesondere kann der Maschinenführer das Bedienelement **3** sowohl im Uhrzeigersinn als auch entgegen dem Uhrzeigersinn bezogen auf die Drehachse **7** drehen, wobei im Zuge der Drehung des Bedienelements **3** auch die Welle **15** gedreht wird.

Die Welle **15** erstreckt sich durch eine Wandung des Gehäuses **24** hindurch in dessen Inneres, in dem die Welle **15** mit einem Sensor **4** sowie einem Rückmeldemittel **6** zusammenwirkt. Der Sensor **4** dient dazu, eine Bewegung der Welle **15** und mithin des Bedienelements **3** zu erfassen. Insbesondere ist der Sensor **4** hier von einem Drehgeber gebildet, der mittels einer optischen Abtastung der Welle **15** deren Bewegung erfassen kann. Eine auf diese Art und Weise erfasste Bewegungsinformation wird mittels einer Datenverbindung **16** an eine Steuereinheit **5** geleitet, die sich ebenfalls innerhalb des Gehäuses **24** befindet. Die Steuereinheit **5** ist dazu geeignet, auf Basis der erhaltenen Bewegungsinformation eine Steuerinformation zu ermitteln, die sodann mittels einer Datenverbindung **18** an ein Arbeitsorgan **10** der Arbeitsmaschine **2** geleitet wird. An dem Arbeitsorgan **10** wird die Steuerinformation in eine Veränderung eines Bedienstatus des Arbeitsorgans **10** umgesetzt, die mit der Eingabe mittels des Bedienelements **3** korrespondiert. Sollte das Arbeitsorgan **10** beispielsweise von einem Frontlader **20** gebildet sein, kann der Bedienstatus beispielsweise eine Höhe bzw. einen Schwenkwinkel des Frontladers **20** betreffen. Somit ist es beispielsweise denkbar, dass eine Drehung des Bedienelements **3** im Uhrzeigersinn um die Drehachse **7** schließlich zu einem Anheben des Frontladers **20** und mithin zu einem Anstieg der Höhe des Frontladers **20** bezogen auf einen Untergrund führt.

Das Arbeitsorgan **10** leitet fortwährend Statusinformationen betreffend eine Änderung Bedienstatus an die Steuereinheit **5,** sodass die Steuereinheit **5** in Abhängigkeit des jeweils aktualisierten Bedienstatus eine Rückmeldeinformation ermitteln kann. Eine Frequenz, mit der der Steuereinheit **5** neue Statusinformationen des jeweiligen Arbeitsorgans **10** zugehen, kann beispielsweise im Bereich zwischen 10 Hz und 500 Hz liegen. Die Änderung des Bedienstatus eines jeweiligen Arbeitsorgans **10** kann insbesondere mittels mindestens eines Sensors **27** erfolgen, der für die Erfassung des Bedienstatus geeignet ist. Der Sensor **27** ist seinerseits mittels einer Datenverbindung **28** mit der Steuereinheit **5** verbunden, sodass ausgehend von dem Sensor **27** die den Bedienstatus wiedergebende Statusinformation an die Steuereinheit **5** leitbar ist.

Die infolge der Statusinformation mittels der Steuereinheit **5** ermittelte Rückmeldeinformation wird sodann mittels einer Datenverbindung **17** an das Rückmeldemittel **6** geleitet. Letzteres ist dazu geeignet, die Rückmeldeinformation dahingehend zu verarbeiten, dass eine Rückmeldereaktion auf die Welle **15** und mithin mittelbar auf das Bedienelement **3** bewirkt wird. In dem gezeigten Beispiel umfasst das Rückmeldemittel **6** eine magnetorheologische Flüssigkeit **12** sowie ein in Form einer Spule ausgebildetes Magnetelement **13.** Das Magnetelement **13** ist dazu geeignet, ein Magnetfeld zu erzeugen, wobei in Abhängigkeit einer Feldstärke des Magnetfeldes eine Viskosität der magnetorheologischen Flüssigkeit **12** veränderbar ist. Insbesondere steigt die Viskosität der magnetorheologischen Flüssigkeit **12** mit steigender Feldstärke des mittels des Magnetelements **13** erzeugten Magnetfeldes an. In dem gezeigten Beispiel ist das Rückmeldemittel **6** derart an der Welle **15** angeordnet, dass verdrehfest an der Welle **15** befestigte Übertragungselemente **25** sich in unmittelbarem Eingriff mit der magnetorheologischen Flüssigkeit **12** befinden. Dies hat zur Folge, dass eine Drehung der Welle **15** mit deren Übertragungselementen **25** eine umso größere Kraft erfordert, desto höher die Viskosität der magnetorheologischen Flüssigkeit **12** ist. Umgekehrt sinkt die zur Drehung der Welle **15** erforderliche Kraft, wenn die Viskosität der magnetorheologischen Flüssigkeit **12** abnimmt. Dabei kann in dem gezeigten Beispiel die Viskosität der magnetorheologischen Flüssigkeit **12** so weit angehoben werden, dass ein weiteres Drehen des Bedienelements 3 um die Drehachse **7** für den Maschinenführer erkennbar nicht weiter möglich sein soll (virtueller Anschlag). Die zunehmende oder abnehmende Veränderung der Rückmeldereaktion (hier in Form einer veränderlichen Viskosität der magnetorheologischen Flüssigkeit **12)** bieten mithin eine haptische Rückmeldung an den Maschinenführer, anhand derer dieser auch ohne optische Inspektion eine Information über den aktuellen Bedienstatus des jeweils mittels der Eingabevorrichtung **1** bedienten Arbeitsorgans **10** erhält.

In dem gezeigten Beispiel wirkt die Eingabevorrichtung **1** mit einer Mehrzahl von Arbeitsorganen **10** zusammen, von denen in **Figur 1** lediglich exemplarisch zwei schematisch dargestellt sind. Um auszuwählen, welches der Arbeitsorgane **10** individuell mittels des Bedienelements **3** bedient werden soll, verfügt die Eingabevorrichtung **1** hier über eine Auswahleinheit **9,** die außerhalb des Gehäuses **24** angeordnet und mit der Steuereinheit **5** mittels einer Datenverbindung **19** verbunden ist. Die Auswahleinheit **9** kann beispielsweise ein grafisches Interface bereithalten, das mittels eines berührungsempfindlichen Bildschirms bedienbar ist. Insbesondere ist es denkbar, dass die verschiedenen Arbeitsorgane **10** auf den Bildschirm mittels grafischer Symbole veranschaulicht sind, sodass mittels einfacher händischer Auswahl eines jeweiligen Symbols das Arbeitsorgan **10** bestimmt werden kann, das fortan mittels des Bedienelements **3** bedient werden soll.

In besonders vorteilhafter Weise verfügt die hier gezeigte Eingabevorrichtung **1** ferner über eine Speichereinheit **11,** die mit der Steuereinheit **5** zusammenwirkt. Die Speichereinheit **11** ist insbesondere dazu geeignet, mindestens eine Statusinformation betreffend einen Bedienstatus mindestens eines Arbeitsorgans **10** zu speichern. Auf diese Weise ist es möglich, im Moment des Wechsels von einem Arbeitsorgan **10** zu einem anderen Arbeitsorganen **10** mittels der Auswahleinheit **9** den letzten aktuellen Bedienstatus des Arbeitsorgans **10**, das nach Betätigung der Auswahleinheit **9** zunächst nicht weiter mittels des Bedienelements **3** bedient werden soll, abzuspeichern. Auf diese Weise kann bei der nächstmaligen Auswahl des besagten Arbeitsorgans **10** unmittelbar auf den nach wie vor die aktuelle Statusinformation betreffend das Arbeitsorgan **10** zugegriffen werden, woraufhin eine entsprechende Rückmeldeinformation ermittelt und schließlich eine dem zugeordnete Rückmeldereaktion auf das Bedienelement **3** ausgeübt werden können.

Die Speichereinheit **11** kann zudem weitere Informationen bereithalten, beispielsweise Informationen betreffend einen Arbeitsbereich eines jeweiligen Arbeitsorgans **10.** Dieser Arbeitsbereich gibt darüber Auskunft, innerhalb welcher Werte betreffend den Bedienstatus des Arbeitsorgans **10** letzteres bedienbar ist. Am Beispiel des Frontladers **20** können als Grenzen des Arbeitsbereichs beispielsweise eine maximal abgesenkte Stellung sowie eine maximal angehobene Stellung definiert werden. Dabei ist es ohne weiteres denkbar, dass für verschiedene Arbeitsorgane **10** verschiedene Arbeitsbereiche definiert werden, die zudem individuell anpassbar gestaltet sein können.

Zudem ist es denkbar, dass die Rückmeldereaktionen veränderbar ausgestaltet sind, sodass die haptische Rückmeldung, die der Maschinenführer letztlich an dem Bedienelement **3** erfährt, an individuelle Bedürfnisse angepasst werden kann. Ebenfalls ist es denkbar, für verschiedene Arbeitsorgane **10** verschiedene Arten haptischer Rückmeldungen zu erzeugen. Dies kann neben der vorstehend beschriebenen Veränderung eines Widerstands gegen das Drehen des Bedienelements **3** um die Drehachse **7** beispielsweise eine Vibration des Bedienelements **3** oder sonstige Rückmeldereaktion betreffen.

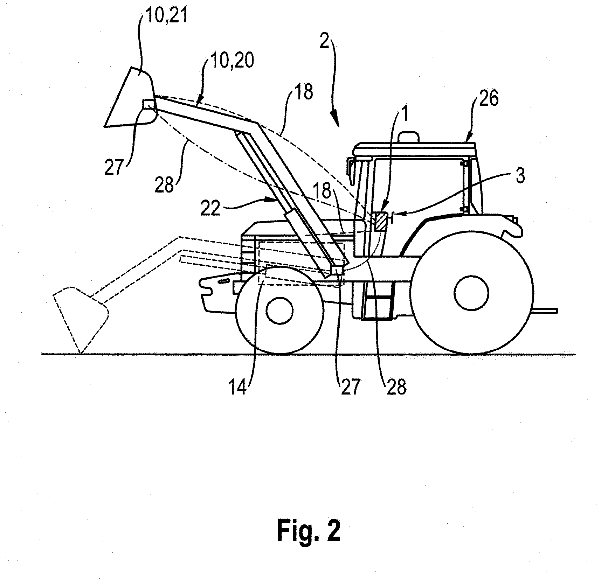

In **Figur 2** ist ein Ausführungsbeispiel einer landwirtschaftlichen Arbeitsmaschine **2** veranschaulicht, die hier von einem Traktor gebildet ist. Die Arbeitsmaschine **2** ist mit einer erfindungsgemäßen Eingabevorrichtung gemäß **Figur 1** ausgestattet. Die Arbeitsmaschine **2** verfügt über ein Arbeitsorgan **10** in Form eines Frontladers **20,** an dessen Ende sich ein weiteres Arbeitsorgan **10** in Form einer Schaufel **21** befindet. Der Frontlader **20** wirkt hier mit einer Hydraulik **22** zusammen, mittels derer der Frontlader **20** anhebbar und absenkbar ist. Die Arbeitsmaschine **2** verfügt über eine Verbrennungskraftmaschine **14,** die hier von einem Dieselaggregat gebildet ist. Zwecks Bedienung sowohl des Frontladers **20** als auch der Schaufel **21** verfügt die Arbeitsmaschine **2** über die Eingabevorrichtung **1,** die wahlweise mit dem Frontlader **20** oder der Schaufel **21** verbindbar ist. Ein jeweiliger Bedienstatus des Frontladers **20** bzw. der Schaufel **21** ist mittelbar mittels des Bedienelements **3** veränderbar. Letzteres ist hier von einem anschlagfrei sowie rückstellkraftfrei drehbaren Drehrad gebildet.

Das Bedienelement **3** befindet sich innerhalb einer Fahrerkabine **26** der Arbeitsmaschine **2** in einer für den Maschinenführer zugänglichen Griffposition. Insbesondere am Beispiel der Schaufel **21** wird deutlich, wie flexibel die erfindungsgemäße Eingabevorrichtung **1** verwendbar ist. Somit ist es beispielsweise denkbar, dass ein Drehwiderstand, der einer Drehung des Bedienelements **3** um seine Drehachse **7** entgegenwirkt, mit einem Füllstand der Schaufel **21** ansteigt. Dies hat den Vorteil, dass eine versehentliche Bewegung der Schaufel **21** über ein unbeabsichtigtes Maß hinaus vor allem in solchen Situationen vermieden wird, in denen die Schaufel **21** mit einem jeweiligen Schüttgut gefüllt ist. Somit kann der Bedienstatus eines jeweiligen Arbeitsorgans **10** auch von einer Mehrzahl von Parametern abhängen, sodass eine jeweilige Rückmeldeinformation, die basierend auf einer in Abhängigkeit des Bedienstatus ermittelten Statusinformation ermittelt und sodann dem Rückmeldemittel **6** übermittelt wird, gleichermaßen von diesen verschiedenen Parametern abhängig gemacht werden kann.

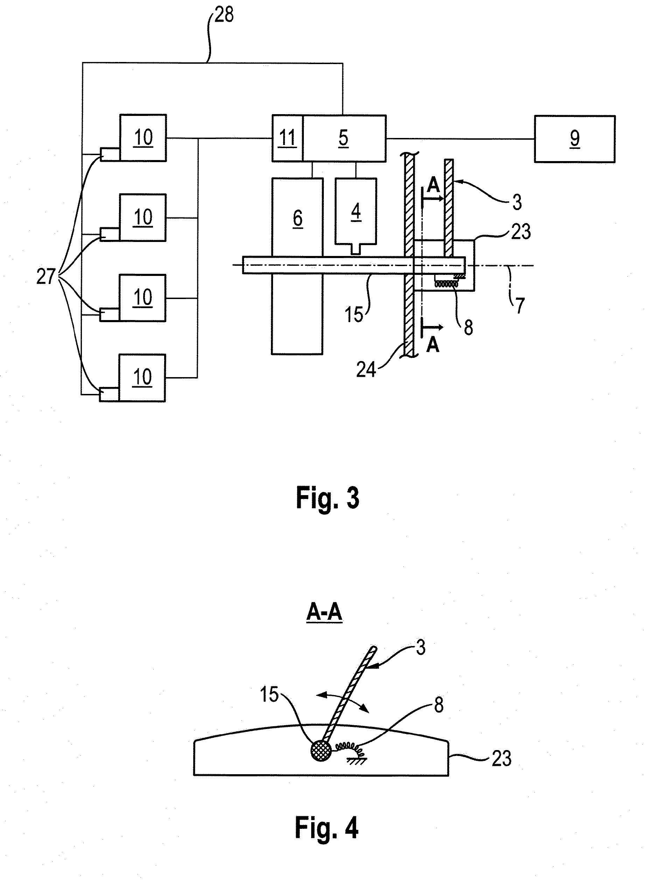

Ein weiteres Ausführungsbeispiel für eine erfindungsgemäße Eingabevorrichtung **1** ist den **Figuren 3 und 4** entnehmbar. Das Ausführungsbeispiel unterscheidet sich von demjenigen gemäß **Figur 1** insbesondere durch die Form des Bedienelements **3.** Letzteres ist hier anstelle eines Drehrades von einem Kipphebel gebildet, der in einem Winkelbereich um eine Drehachse **7** verschwenkbar gelagert ist. Das Bedienelement **3** ist in Drehmoment übertragender Weise mit einer Welle **15** gekoppelt, die in ihrer Wirkungsweise identisch mit derjenigen gemäß der Eingabevorrichtung gemäß **Figur 1** ausgebildet ist. Da ein Kipphebel kein endlos bewegbares Bedienelement **3** darstellt, umfasst die Eingabevorrichtung **1** gemäß den **Figuren 3 und 4** ein Rückstellelement **8,** das hier in Form einer Drehmomentfeder ausgebildet ist. Das Rückstellelement **8** wirkt unmittelbar auf die Drehachse **15** und führt dazu, dass diese sich nach Wegfall einer auf das Bedienelement **3** einwirkenden Bedienkraft wieder in eine Nullstellung bewegt. Die Nullstellung, die in den Figuren nicht dargestellt ist, korrespondiert mit einer Mittelstellung des Bedienelements **3,** von der ausgehend eine Bewegung des Bedienelements **3** sowohl in die eine als auch in die andere Richtung im gleichen Umfang möglich ist. Das Bedienelement **3** ist außerhalb eines Gehäuses **24** der Eingabevorrichtung **1** gelagert, wobei es sich teilweise und mithin in einer für den Maschinenführer der Arbeitsmaschine **2** zugänglichen Weise außerhalb eines Gehäuses **23** erstreckt, in dem im Übrigen unzugängliche Teile der Eingabevorrichtung **1** angeordnet sind.

Eine Rückmeldereaktion, die mittels eines Rückmeldemittels **6** auf die Drehachse **15** und mithin auf das Bedienelement **3** ausgeübt wird, kann auch hier in besonders vorteilhafter Weise in einer veränderlichen Kraft bzw. einem veränderlichen Widerstand bestehen, der eine Bewegung des Bedienelements **3,** das heißt dessen Verschwenkung innerhalb des genannten Winkelbereichs, erschwert oder erleichtert. Insbesondere kann die Maschinenführer mittels einer sukzessiven "Versteifung", das heißt einem sukzessiv ansteigenden Widerstand gegen die Schwenkbewegung des Bedienelements **3,** haptisch verdeutlicht werden, dass sich ein Bedienstatus eines jeweilig bedienten Arbeitsorgans **10** in Richtung einer Maximalstellung seines Arbeitsbereichs bewegt, über die hinaus das Arbeitsorgan **10** nicht bewegt bzw. verstellt werden kann oder soll. Andere Kriterien bzw. Parameter für die Veränderung der Rückmeldereaktion sind ebenfalls denkbar. Weiterhin sind andere Rückmeldereaktionen wie beispielsweise eine Vibration denkbar. Im Ergebnis kann die erfindungsgemäße Eingabevorrichtung für eine Vielzahl verschiedener Arbeitsorgane **10** verwendet werden und muss nicht wie im Stand der Technik individuell auf ein jeweiliges Arbeitsorgan zugeschnitten werden. In dem gezeigten Beispiel sind mit der Eingabevorrichtung **1** insgesamt vier Arbeitsorgane **10** verbunden, die mittels einer Auswahleinheit **9** ausgewählt werden können. In einer Regel ist eine Bedienung lediglich eines Arbeitsorgans **10** gleichzeitig möglich. Die Arbeitsorgane **10** wirken hier jeweils mit einem Sensor **27** zusammen, wobei die Sensoren **27** mittels einer Datenverbindung **28** mit der Steuereinheit **5** verbunden sind.

### Bezugszeichenliste

- 1: Eingabevorrichtung
- 2: Arbeitsmaschine
- 3: Bedienelement
- 4: Sensor
- 5: Steuereinheit
- 6: Rückmeldemittel
- 7: Drehachse
- 8: Rückstellelement
- 9: Auswahleinheit
- 10: Arbeitsorgan
- 11: Speichereinheit
- 12: Flüssigkeit
- 13: Magnetelement
- 14: Verbrennungskraftmaschine
- 15: Welle
- 16: Datenverbindung
- 17: Datenverbindung
- 18: Datenverbindung
- 19: Datenverbindung
- 20: Frontlader
- 21: Schaufel
- 22: Hydraulik
- 23: Gehäuse
- 24: Gehäuse
- 25: Übertragungselement
- 26: Fahrerkabine
- 27: Sensor
- 28: Datenverbindung

## Patentansprüche

1. Landwirtschaftliche Arbeitsmaschine (2) mit einer Eingabevorrichtung (1), die Eingabevorrichtung (1) umfassend
- ein Bedienelement (3),
- mindestens einen Sensor (4),
- eine Steuereinheit (5) sowie
- ein Rückmeldemittel (6),
wobei das Bedienelement (3) stufenlos und/oder inkrementell bewegbar ausgebildet ist, sodass es eine stufenlose und/oder inkrementelle Einstellung mindestens eines Eingabewerts ermöglicht,
wobei der Sensor (4) mit dem Bedienelement (3) verbunden ist und mittels des Sensors (4) mindestens eine Bewegungsinformation betreffend eine Bewegung des Bedienelements (3) erfassbar ist, die sodann an die Steuereinheit (5) leitbar ist,
wobei mittels der Steuereinheit (5) die Bewegungsinformation verarbeitbar und basierend auf der Bewegungsinformation eine Steuerinformation zur Steuerung eines Arbeitsorgans (10) der Arbeitsmaschine (2) ermittelbar und an das Arbeitsorgan (10) leitbar ist,
wobei mittels der Steuereinheit (5) eine Statusinformation betreffend einen Bedienstatus des Arbeitsorgans (10) verarbeitbar und basierend auf der Statusinformation eine Rückmeldeinformation ermittelbar sind, die an das Rückmeldemittel (6) leitbar ist,
wobei das Rückmeldemittel (6) und das Bedienelement (3) in Kraft übertragender Weise gekoppelt oder koppelbar sind, sodass mittels des Rückmeldemittels (6) eine Rückmeldeinformation abhängige Rückmeldereaktion auf das Bedienelement (3) ausübbar ist,
**gekennzeichnet durch**
mindestens eine Auswahleinheit (9), mittels derer mindestens ein mittels der Eingabevorrichtung (1) zu bedienendes Arbeitsorgan (10) der landwirtschaftlichen Arbeitsmaschine (2) auswählbar ist, wobei die Eingabevorrichtung (1) mit einer Mehrzahl von verschiedenen Arbeitsorganen (10) verbunden ist, wobei durch die Eingabevorrichtung (1) ein Frontlader (20), ein Hubwerk, eine Lenkung (steer-by-wire) und eine Datenverarbeitungsanlage zu bedienen sind.

2. Eingabevorrichtung (1) nach Anspruch 1, **dadurch gekennzeichnet, dass** das Bedienelement (3) anschlagfrei und/oder rückstellkraftfrei ausgebildet ist.

3. Eingabevorrichtung (1) nach Anspruch 1 oder 2, **dadurch gekennzeichnet, dass** das Bedienelement (3) von einem Drehrad gebildet ist, das um eine Drehachse (7) drehbar gelagert ist.

4. Eingabevorrichtung (1) nach einem der Ansprüche 1 bis 3, **dadurch gekennzeichnet, dass** das Bedienelement (3) mit mindestens einem Rückstellelement (8) zusammenwirkt, mittels dessen das Bedienelement (3) nach einer Wegnahme einer Bedienkraft in eine Nullstellung rücküberführbar ist, wobei das Bedienelement (3) vorzugsweise von einem Joystick, einem Kipphebel oder einem Druckknopf gebildet ist.

5. Eingabevorrichtung (1) nach einem der Ansprüche 1 bis 4, **gekennzeichnet durch** mindestens eine Speichereinheit (11), die mit der Steuereinheit (5) zusammenwirkt, wobei auf der Speichereinheit (11) mindestens eine Statusinformation betreffend einen Bedienstatus mindestens eines mittels der Eingabevorrichtung (1) zu bedienenden Arbeitsorgans (10) speicherbar oder gespeichert ist.

6. Eingabevorrichtung (1) nach Anspruch 5, **dadurch gekennzeichnet, dass** auf der Speichereinheit (11) mindestens eine Bereichsinformation betreffend einen Arbeitsbereich eines mittels der Eingabevorrichtung (1) zu bedienenden Arbeitsorgans (10) gespeichert oder speicherbar ist.

7. Eingabevorrichtung (1) nach einem der Ansprüche 1 bis 6, **dadurch gekennzeichnet, dass** das Rückmeldemittel (6) eine magnetorheologische Flüssigkeit (12) sowie mindestens ein Magnetelement (13), vorzugsweise in Form einer Spule, aufweist.

8. Verfahren zur Bedienung einer landwirtschaftlichen Arbeitsmaschine (2), umfassend die folgenden Verfahrensschritte:
a) Ein Bedienelement (3) einer Eingabevorrichtung (1) wird ausgehend von einer ersten Bedienposition stufenlos und/oder inkrementell in Richtung einer zweiten Bedienposition bewegt.
b) Ein mit dem Bedienelement (3) zusammenwirkender Sensor (4) erfasst mindestens eine Bewegungsinformation betreffend die Bewegung des Bedienelements (3), woraufhin die Bewegungsinformation an eine Steuereinheit (5) geleitet wird.
c) Die Bewegungsinformation wird mittels der Steuereinheit (5) verarbeitet, wobei mindestens eine Steuerinformation zur Steuerung eines jeweiligen Arbeitsorgans (10) der Arbeitsmaschine (2) ermittelt wird.
d) Die Steuerinformation wird an das Arbeitsorgan (10) geleitet und an dem Arbeitsorgan (10) in eine Steuerreaktion umgesetzt, infolge derer sich ein Bedienstatus des Arbeitsorgans (10) ändert.
e) Eine infolge der Veränderung des Bedienstatus veränderte Statusinformation des Arbeitsorgans (10) wird an die Steuereinheit (5) geleitet, wobei mittels der Steuereinheit (5) die Statusinformation verarbeitet und basierend auf der Statusinformation eine Rückmeldereaktion ermittelt werden.
f) Die Rückmeldeinformation wird an ein Rückmeldemittel (6) geleitet, das in Kraft übertragender Weise mit dem Bedienelement (3) gekoppelt oder koppelbar ist, wobei mittels des Rückmeldemittels (6) in Abhängigkeit der Rückmeldeinformation eine Rückmeldereaktion auf das Bedienelement (3) ausgeübt wird, die im Zuge der Bewegung des Bedienelements (3) verändert wird.
g) **Gekennzeichnet durch** mindestens eine Auswahleinheit (9), mittels derer mindestens ein mittels der Eingabevorrichtung (1) zu bedienendes Arbeitsorgan (10) der landwirtschaftlichen Arbeitsmaschine (2) ausgewählt wird, wobei die Eingabevorrichtung (1) mit einer Mehrzahl von verschiedenen Arbeitsorganen (10) verbunden ist, wobei durch die Eingabevorrichtung (1) ein Frontlader (20), ein Hubwerk, eine Lenkung (steer-by-wire) und eine Datenverarbeitungsanlage zu bedienen sind.

9. Verfahren nach Anspruch 8, **dadurch gekennzeichnet, dass** mittels des Rückmeldemittels (6) eine der Bewegung des Bedienelements (3) entgegenstehende Rückmeldereaktion mit fortschreitender Bewegung des Bedienelements (3) sukzessive erhöht wird.

10. Verfahren nach Anspruch 9, **dadurch gekennzeichnet, dass** mit Erreichen einer Maximalstellung des Arbeitsorgans (10), über die hinaus das Arbeitsorgan (10) nicht weiter verstellt werden kann, die Rückmeldereaktion maximal wird, sodass ein händisches Bewegen des Bedienelements (3) über eine mit der Maximalstellung des Arbeitsorgans (10) korrespondierende Bedienposition hinaus blockiert ist.

11. Verfahren nach einem der Ansprüche 8 bis 10, **dadurch gekennzeichnet, dass** eine Rückmeldefrequenz, mit der das Rückmeldemittel (6) eine Rückmeldereaktion auf das Bedienelement (3) verändert, mindestens 500 Hz, vorzugsweise mindestens 1500 Hz, weiter vorzugsweise mindestens 5000 Hz, beträgt.

12. Verfahren nach einem der Ansprüche 8 bis 11, **dadurch gekennzeichnet, dass** das Bedienelement (3) nach einer Wegnahme einer Bedienkraft in seiner aktuellen Bedienposition verbleibt.

13. Verfahren nach einem der Ansprüche 8 bis 12, **dadurch gekennzeichnet, dass** mittels einer Auswahleinheit (9) ein Arbeitsorgan (10) der Arbeitsmaschine (2) ausgewählt wird, das mittels der Eingabevorrichtung (1) bedient werden soll.

14. Verfahren nach Anspruch 13, **dadurch gekennzeichnet, dass** mittels der Auswahleinheit (9) eine Auswahlinformation an die Steuereinheit (5) übermittelt wird, die in Kenntnis einer Statusinformation betreffend einen Bedienstatus des Arbeitsorgans (10) eine Rückmeldeinformation ermittelt, wobei die Rückmeldeinformation an das Rückmeldemittel (6) geleitet und mittels des Rückmeldemittels (6) entsprechend der Rückmeldeinformation eine Rückmeldereaktion auf das Bedienelement (3) ausgeübt wird.

## Claims

1. An agricultural working machine (2) with an input device (1), the input device (1) comprising:
- an operating element (3),
- at least one sensor (4),
- a control unit (5), as well as
- a feedback means (6),
wherein the operating element (3) is continuously variable and/or incrementally movable in configuration, so that it allows a continuously variable and/or incremental adjustment of at least one input value to be made,
wherein the sensor (4) is connected to the operating element (3) and by means of the sensor, at least one movement information item concerning a movement of the operating element (3) can be acquired and which can then be directed to the control unit (5),
wherein the movement information item can be processed by means of the control unit (5) and, based on the movement information item, a control information item for controlling a working unit (10) of the working machine (2) can be determined and can be directed to the working unit (10), wherein by means of the control unit (5), a status information item concerning an operating status of the working unit (10) can be processed and, based on the status information, a feedback information item can be determined which can be directed to the feedback means (6),
wherein the feedback means (6) and the operating element (3) are coupled or can be coupled in a power transmitting manner so that by means of the feedback means (6), a feedback reaction which is dependent on the feedback information item can be exerted on the operating element (3), **characterized by**
at least one selection unit (9), by means of which at least one working unit (10) of the agricultural working machine (2) can be selected by means of the input device (1), wherein the input device (1) is connected to a plurality of different working units (10), wherein by means of the input device (1), a front loader (20), lifting gear, a steering system (steer by wire) and a data processing unit can be operated.

2. The input device (1) according to claim 1, **characterized in that** the operating element (3) can move freely and/or is non-resetting in configuration.

3. The input device (1) according to claim 1 or claim 2, **characterized in that** the operating element (3) is formed by a setting dial which is rotatably mounted about an axis of rotation (7).

4. The input device (1) according to one of claims 1 to 3, **characterized in that** the operating element (3) cooperates with at least one resetting element (8), by means of which the operating element (3) can be returned to a neutral position after removing an operating force, wherein the operating element (3) is preferably formed as a joystick, a tilt lever or a push button.

5. The input device (1) according to one of claims 1 to 4, **characterized by** at least one storage unit (11) which cooperates with the control unit (5), wherein at least one status information item concerning an operating status of at least one working unit (10) to be operated by means of the input device (1) can be stored or is stored.

6. The input device (1) according to claim 5, **characterized in that** at least one range information item concerning a working range of a working unit (10) to be operated by means of the input device (1) can be stored or is stored in the storage unit (11).

7. The input device (1) according to one of claims 1 to 6, **characterized in that** the feedback means (6) has a magnetorheological liquid (12) as well as at least one magnetic element (13), preferably in the form of a coil.

8. A method for operating an agricultural working machine (2), comprising the following steps of the method:
a) continuously and/or incrementally moving an operating element (3) of an input device (1) from a first operating position in the direction of a second operating position,
b) using a sensor (4) which cooperates with the operating element (3), detecting at least one movement information item concerning the movement of the operating element (3), and subsequently directing the movement information item to a control unit (5),
c) processing the movement information item by means of the control unit (5), wherein at least one control information item is determined for controlling a respective working unit (10) of the working machine (2),
d) directing the control information item to the working unit (10) and transforming it into a control reaction in the working unit (10), as a result of which an operating status of the working unit (10) is varied,
e) directing a status information item for the working unit (10) which has been varied as a result of the variation in the operating status to the control unit (5), wherein the status information item is processed by means of the control unit (5) and a feedback reaction is determined on the basis of the status information item,
f) directing the feedback information item to a feedback means (6) which is coupled to or can be coupled to the operating element (3) in a power transmitting manner, wherein by means of the feedback means (6), a feedback reaction which is a function of the feedback information item and which is varied during the course of the movement of the operating element (3) is exerted on the operating element (3),
g) **characterized by** at least one selection unit (9), by means of which at least one working unit (10) of the agricultural working machine (2) which is to be operated is selected by means of the input device (1), wherein the input device (1) is connected to a plurality of different working units (10), wherein by means of the input device (1), a front loader (20), lifting gear, a steering system (steer by wire) and a data processing unit are operated.

9. The method according to claim 8, **characterized in that** by means of the feedback means (6), a feedback reaction which opposes the movement of the operating element (3) is successively increased with increasing movement of the operating element (3).

10. The method according to claim 9, **characterized in that** upon reaching a maximum position of the working unit (10) beyond which the working unit (10) cannot be moved any further, the feedback reaction is a maximum, so that a manual movement of the operating element (3) beyond an operating position which corresponds to the maximum position of the working unit (10) is blocked.

11. The method according to one of claims 8 to 10, **characterized in that** a feedback frequency at which the feedback means (6) varies a feedback reaction on the operating element (3) is at least 500 Hz, preferably at least 1500 Hz, more preferably at least 5000 Hz.

12. The method according to one of claims 8 to 11, **characterized in that** after removing an operating force, the operating element (3) remains in its current operating position.

13. The method according to one of claims 8 to 12, **characterized in that** a working unit (10) of the working machine (2) which is to be operated by means of the input device (1) is selected by means of a selection unit (9).

14. The method according to claim 13, **characterized in that** by means of the selection unit (9), a selection information item is transmitted to the control unit (5) which, in having a status information item concerning an operating status of the working unit (10), determines a feedback information item, wherein the feedback information is directed to the feedback means (6) and, by means of the feedback means (6), a feedback reaction is exerted on the operating element (3) which corresponds to the feedback information item.

## Revendications

1. Machine de travail agricole (2) comprenant un dispositif d'entrée (1), le dispositif d'entrée (1) incluant
- un élément de manœuvre (3),
- au moins un capteur (4),
- une unité de commande (5) ainsi que
- un moyen de rétroaction (6),
l'élément de manœuvre (3) étant conçu de manière déplaçable de façon continue et/ou incrémentielle, de sorte qu'il permet un réglage continu et/ou incrémentiel au moins d'une valeur d'entrée, le capteur (4) étant relié à l'élément de manœuvre (3) et au moins une information de déplacement relative à un déplacement de l'élément de manœuvre (3) pouvant être détectée au moyen du capteur (4) et être ensuite transmise à l'unité de commande (5), l'information de déplacement pouvant être traitée au moyen de l'unité de commande (5) et, sur la base de l'information de déplacement, une information de commande pouvant être déterminée pour commander un organe de travail (10) de la machine de travail (2) et transmise à l'organe de travail (10), une information d'état relative à un état de manœuvre de l'organe de travail (10) pouvant être traitée au moyen de l'unité de commande (5) et, sur la base de l'information d'état, une information de rétroaction pouvant être déterminée et transmise au moyen de rétroaction (6), le moyen de rétroaction (6) et l'élément de manœuvre (3)
étant couplés ou couplables de manière à transmettre une force, de sorte qu'une réaction de rétroaction dépendante de l'information de rétroaction peut être exercée sur l'élément de manœuvre (3) au moyen du moyen de rétroaction (6), **caractérisée par** au moins une unité de sélection (9) au moyen de laquelle au moins un organe de travail (10) de la machine de travail agricole (2) à manœuvrer au moyen du dispositif d'entrée (1) peut être sélectionné, le dispositif d'entrée (1) étant relié à une pluralité de divers organes de travail (10), le dispositif d'entrée (1) permettant de manœuvrer un chargeur frontal (20), un mécanisme de levage, une direction (steer-by-wire) et une installation de traitement de données.

2. Dispositif d'entrée (1) selon la revendication 1, **caractérisé en ce que** l'élément de manœuvre (3) est conçu sans butée et/ou sans force de rappel.

3. Dispositif d'entrée (1) selon la revendication 1 ou 2, **caractérisé en ce que** l'élément de manœuvre (3) est formé par un volant qui est monté à rotation autour d'un axe de rotation (7).

4. Dispositif d'entrée (1) selon une des revendications 1 à 3, **caractérisé en ce que** l'élément de manœuvre (3) coopère avec au moins un élément de rappel (8) au moyen duquel l'élément de manœuvre (3) peut être ramené dans une position zéro après une interruption d'une force de manœuvre, l'élément de manœuvre (3) étant formé de préférence par une manette, un levier basculant ou un bouton-poussoir.

5. Dispositif d'entrée (1) selon une des revendications 1 à 4, **caractérisé par** au moins une unité de mémoire (11) qui coopère avec l'unité de commande (5), au moins une information d'état relative à un état de manœuvre au moins d'un organe de travail (10) à manœuvrer au moyen du dispositif d'entrée (1) étant mémorisable ou mémorisée sur l'unité de mémoire (11).

6. Dispositif d'entrée (1) selon la revendication 5, **caractérisé en ce qu'**au moins une information de plage relative à une plage de travail d'un organe de travail (10) à manœuvrer au moyen du dispositif d'entrée (1) est mémorisable ou mémorisée sur l'unité de mémoire (11).

7. Dispositif d'entrée (1) selon une des revendications 1 à 6, **caractérisé en ce que** le moyen de rétroaction (6) comporte un liquide magnétorhéologique (12) ainsi qu'au moins un élément magnétique (13), de préférence en forme de bobine.

8. Procédé d'utilisation d'une machine de travail agricole (2), incluant les étapes de procédé suivantes :
a) Un élément de manœuvre (3) d'un dispositif d'entrée (1) est déplacé de façon continue et/ou incrémentielle depuis une première position de manœuvre en direction d'une seconde position de manœuvre.
b) Un capteur (4) coopérant avec l'élément de manœuvre (3) détecte au moins une information de déplacement relative au déplacement de l'élément de manœuvre (3), après quoi l'information de déplacement est transmise à une unité de commande (5).
c) L'information de déplacement est traitée au moyen de l'unité de commande (5), au moins une information de commande étant déterminée pour commander un organe de travail respectif (10) de la machine de travail (2).
d) L'information de commande est transmise à l'organe de travail (10) et convertie, au niveau de l'organe de travail (10), en une réaction de commande, à la suite de laquelle un état de manœuvre de l'organe de travail (10) est modifié.
e) Une information d'état de l'organe de travail (10) modifiée à la suite de la modification de l'état de manœuvre est transmise à l'unité de commande (5), l'information d'état étant traitée au moyen de l'unité de commande (5) et une réaction de rétroaction étant déterminée sur la base de l'information d'état.
f) L'information de rétroaction est transmise à un moyen de rétroaction (6) qui est couplé ou couplable à l'élément de manœuvre (3) de manière à transmettre une force, à l'aide du moyen de rétroaction (6) étant exercée sur l'élément de manœuvre (3), en fonction de l'information de rétroaction, une réaction de rétroaction qui est modifiée au cours du déplacement de l'élément de manœuvre (3).
g) **caractérisé par** au moins une unité de sélection (9) au moyen de laquelle au moins un organe de travail (10) de la machine de travail agricole (2) à manœuvrer au moyen du dispositif d'entrée (1) est sélectionné, le dispositif d'entrée (1) étant relié à une pluralité de divers organes de travail (10), le dispositif d'entrée (1) permettant de manœuvrer un chargeur frontal (20), un mécanisme de levage, une direction (steer-by-wire) et une installation de traitement de données.

9. Procédé selon la revendication 8, **caractérisé en ce qu'**à l'aide du moyen de rétroaction (6), une réaction de rétroaction opposée au déplacement de l'élément de manœuvre (3) est accrue de manière successive à mesure que le déplacement de l'élément de manœuvre (3) progresse.

10. Procédé selon la revendication 9, **caractérisé en ce que** la réaction de rétroaction est maximale lorsqu'est atteinte une position maximale de l'organe de travail (10) au-delà de laquelle l'organe de travail (10) ne peut plus être déplacé, de sorte qu'un déplacement manuel de l'élément de manœuvre (3) au-delà d'une position de manœuvre correspondant à la position maximale de l'organe de travail (10) est bloquée.

11. Procédé selon une des revendications 8 à 10, **caractérisé en ce qu'**une fréquence de rétroaction, avec laquelle le moyen de rétroaction (6) modifie une réaction de rétroaction sur l'élément de manœuvre (3), est d'au moins 500 Hz, de préférence d'au moins 1 500 Hz, plus préférentiellement d'au moins 5000 Hz.

12. Procédé selon une des revendications 8 à 11, **caractérisé en ce qu'**après l'interruption d'une force de manœuvre, l'élément de manœuvre (3) reste dans une position de manœuvre instantanée.

13. Procédé selon une des revendications 8 à 12, **caractérisé en ce qu'**au moyen d'une unité de sélection (9) est sélectionné un organe de travail (10) de la machine de travail (2), lequel doit être manœuvré au moyen du dispositif d'entrée (1).

14. Procédé selon la revendication 13, **caractérisé en ce qu'**au moyen de l'unité de sélection (9) est transmise à l'unité de commande (5) une information de sélection qui, en connaissance d'une information d'état relative à un état de manœuvre de l'organe de travail (10), détermine une information de rétroaction, l'information de rétroaction étant transmise au moyen de rétroaction (6) et, en fonction de l'information de rétroaction, une réaction de rétroaction étant exercée sur l'élément de manœuvre (3) à l'aide du moyen de rétroaction (6).
